## Europäisches Patentamt
## European Patent Office
## Office européen des brevets

(19)

(11) Numéro de publication: **0 020 469**
**B1**

(12) **FASCICULE DE BREVET EUROPEEN**

(45) Date de publication du fascicule du brevet: **11.07.84**

(51) Int. Cl.³: **C 08 B 15/02, A 23 L 1/00, A 61 K 7/00**

(21) Numéro de dépôt: **79901285.1**

(22) Date de dépôt: **23.10.79**

(86) Numéro de dépôt international: **PCT/CH79/00138**

(87) Numéro de publication internationale: **WO 80/00843 01.05.80 Gazette 80/10**

(54) PROCEDE POUR DEPOLYMERISER DES FIBRES DE CELLULOSE ET MATIERE CELLULOSIQUE DEPOLYMERISEE A FAIBLE TAUX DE CRISTALLINITE SUSCEPTIBLE D'ETRE OBTENUE A PARTIR DE CE PROCEDE.

(30) Priorité: **24.10.78 CH 10963/78**

(43) Date de publication de la demande: **07.01.81 Bulletin 81/1**

(45) Mention de la délivrance du brevet: **11.07.84 Bulletin 84/28**

(84) Etats contractants désignés: **CH DE FR GB NL SE**

(56) Documents cités:
DD - A - 71 282
DE - C - 482 727
FR - A - 471 479
FR - A - 748 428
GB - A - 476 191
US - A - 3 397 198

Le dossier contient des informations techniques présentées postérieurement au dépôt de la demande et ne figurant pas dans le présent fascicule.

(73) Titulaire: **BATTELLE MEMORIAL INSTITUTE**
**7 route de Drize**
**CH-1227 Carouge/Genève (CH)**

(72) Inventeur: **SACHETTO, Jean-Pierre**
**L'Escalade 3 rue de Savoie**
**F-74160 St. Julien-en-Genevois (FR)**
Inventeur: **MICHEL, Jean-Pierre**
**Avenue du Jura 51**
**F-01210 Ferney-Voltaire (FR)**
Inventeur: **CUCCOLO, Sergio**
**rue Alcide Jentzer 9**
**1205 Genève (CH)**
Inventeur: **REGNAULT, Alain**
**Villar-Tacon par Ornex**
**F-01210 Ferney-Voltaire (FR)**

(74) Mandataire: **Dousse, Blasco et al,**
**7, route de Drize**
**CH-1227 Carouge/Genève (CH)**

(56) Documents cités:
Chemical Abstracts, volume 76, no. 16, 17 avril 1972 Columbus Ohio, USA, V.I.Sharkov "Structure of cellulose subjected to the action of hydrogen chloride under pressure" page 101, abrégé 87379 w

Courier Press, Leamington Spa, England.

㊏ Documents cités

**Encycl. Pol. Sci and Technol. Vol. 3, pages 156, 157, 459 et 511**

**Ind. and Engineering Chem. 54(9) pages 20-29 (1962)**

**Naturwissenschaften 69, 241 (1982)**

**Norsk Skogindustri, 1959, Ellefsen et al, pp.411-421**

# 0 020 469

## Description

### Domaine technique

La présente invention concerne un procédé pour dépolymériser des fibres de cellulose et une poudre de cellulose dépolymérisée, le procédé a pour objet la dépolymérisation contrôlée de la cellulose et, notamment, sa conversion en une poudre de cellulose dépolymérisée à taux élevé d'amorphicité.

On connait la cellulose microcristalline obtenue par une combinaison de traitements chimiques et physiques. Ainsi, par hydrolyse hétérogène dans les acides dilués, on dissout principalement les régions amorphes de la cellulose; puis on en récupère les portions cristallines non dissoutes et one les désintègre mécaniquement. Le produit de cette hydrolyse acide hétérogène est une cellulose dépolymérisée mais qui présente un "degré de polymérisation limite" ("level-off degree of polymerization" ou "DP cellulose"). Ce produit est ensuite broyé et séché afin d'obtenir une poudre fine de cellulose dépolymérisée microcristalline.

### Technique antérieure

L'état de la technique relative à la cellulose microcristalline peut être illustré par les publications suivantes:

—le brevet américain No 2 978 446,

—l'article intitulé: "Microcrystalline Cellulose", publié dans la revue Industrial and Engineering Chemistry, Vol. 5, No. 9, septembre 1962, pages 20 à 29.

—l'article intitulé "Microcrystalline Cellulose Powders, Properties and possible applications in nutrition", publié dans la revue Tappi, mai 1978, Vol. 61, No. 5.

Les particules de la poudre de cellulose microcristalline obtenue de la manière décrite perdent la forme fibreuse initiale de la cellulose, mais on a pu constater qu'elles présentent néanmoins une anisotropie élevée et une structure microcristalline aciculaire qui peut être indésirable pour diverses applications, dans le domaine de la chimie alimentaire notamment, en raison des risques de lésions au niveau cellulaire qu'une telle cellulose cristalline peut occasionner.

Cependant, ces procédés connus de fabrication de la cellulose microcristalline ne permettent pas d'effectuer une dépolymérisation contrôlée, susceptible d'atteindre des degrés de polymérisation bien déterminés, situés en-dessous de ladite limite résultant de l'hydrolyse acide hétérogène.

D'autres références concernant la dépolymérisation de la cellulose peuvent être citées, à savoir:

Le brevet d'Allemagne de l'Est DL—A—91974 décrit le traitement de la cellulose par HCl gazeux au-dessous de 40°C sans solvant, ce qui fournit un produit se prêtant à la fabrication de la cellulose microcristalline.

Le brevet d'Allemagne de l'Est DL—A—71282 décrit un procédé pour hydrolyser les fibres cellulosiques jusqu'à des dimensions de l'ordre de 150 $\mu$m, après quoi on soumet ce produit à une pulvérisation dans un moulin à jet d'air, ce qui fournit des particules de 5 à 20 $\mu$m et d'un degré de polymérisation (DP) de l'ordre de 180. Il n'est ce-pendant pas indiqué qu'une telle cellulose soit amorphe.

Le brevet allemand DE—B—1.470.825 décrit la préparation de microcristallites de cellulose par hydrolyse des fractions amorphes de fibres cellulosiques, puis broyage en présence d'eau et lyophilisaton de la suspension aqueuse ainsi obtenue.

Le brevet allemand DE—B—1,123,460 décrit l'hydrolyse de matières cellulosiques, notamment la viscose, par du HCl 2,5 N bouillant. Le produit ainsi obtenu, est lavé, neutralisé et broyé en présence d'eau de manière qu'on obtienne une suspension de microparticules de cellulose de 0,5 à 1 $\mu$m.

Le brevet autrichien 228.805 concerne une méthode sensiblement similaire à celle mentionnée ci-dessus, de même que le brevet US—A—2,978,446. On peut encore citer les publications de Chemical Abstracts suivantes: CA*66*, 9991w (1967); CA*66*, 77156a (1967); CA*67*, 118346d (1967); CA*712*, 123397p (1970); CA*73*, 51582 (1970); CA*73*, 67850c (1970); CA*82*, 87960c (1975); CA*83*, 130305c (1975) et CA*84*, 6765j (1976).

D'autres références existent, dans lesquelles la cellulose est mise en colution complète dans un acide concentré et le produit dissous est ensuite séparé par précipitation et isolé. Ainsi, Ø. ELLEFSEN et al. décrit dans Norsk Skog Industri *1959*, p. 411 la dissolution à 20°C d'échantillons de cellulose dans du HCl aqueux à 38—40,3% et la reprécipitation de la cellulose dissoute après des périodes diversés par adjonction d'eau. Cette publication indique que les produits obtenus étaient cristallins et non pas amorphes.

Le brevet français 471,479 décrit la dissolution de la cellulose dans du HCl aqueux de concentration supérieure à 39% et la précipitation du produit dissous (par l'eau ou d'autres solvants) en produits cellulosiques. Il n'est cependant pad indiqué, dans cette référence, que les produits obtenus soient de la cellulose amorphe.

Le brevet anglais 476,191 divulgue le traitement de la cellulose par l'acide fluorhydrique concentré et sa conversion en produits hydro-solubles, tandis que le brevet suisse 79 809 décrit la dissolution de la cellulose dans des mélanges de HCl (25—35%) et d'acides sulfuriques ou

3

# O 020 469

phosphoriques à des températures inférieures à 50°C. Ces références n'indiquent pas, cependant, que les produits cellulosiques obtenus soient amorphes.

On connait également le brevet américain No. 4 058 411 qui décrit un procédé de décristallisation de la cellulose au moyen de l'acide phosphorique concentré, afin de favoriser la conversion ultérieure de la cellulose décristallisée en glucose par une hydrolyse acide.

Toutefois, ce procédé ne permet pas non plus la production d'une poudre de cellulose dépolymérisée, sensiblement amorphe ayant un degré de polymérisation contrôlé.

Le but de la présente invention est d'obtenir une cellulose dépolymérisée formée d'un poly-$\beta$ (1—4)-anhydroglucose ayant un degré d'amorphicité et un degré de polymérisation contrôlés.

## Exposé de l'invention

La matière cellulosique susceptible de résultes du procédé de l'invention est caractérisée par le fait que son degré de cristallinité ne dépasse pas 70% et son degré de polymérisation d'environ 10 à 200 unités d'anhydroglucose. Cette matière se présente sous forme d'une poudre qu'on peut utiliser telle quelle ou qu'on peut encore améliorer et homogénéiser par broyage mécanique.

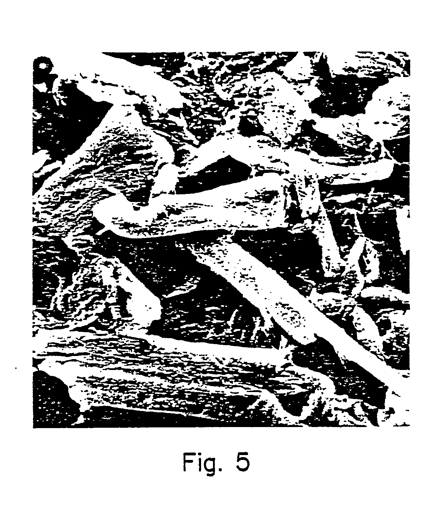

Les particules de cette poudre sont de forme globulaire aux angles arrondis, comme on peut le voir au dessin annexé (voir fig. 5), et non pas aciculaire comme la cellulose microcristalline habituelle. Les particules peuvent être de dimensions très variables, mais une gamme de distribution préférée comprend des particules de l'ordre de 50 à 100 $\mu$m. La densité de la poudre, au taux d'humidité de 2 à 5%, est de l'ordre de 0,3 à 0,7 kg/l, cette densité concernant la poudre à l'état libre, non comprimée.

Le procédé de l'invention permettant d'obtenir la poudre mentionnée ci-dessus est caractérisé par le fait que:

a) on dissout une matière cellulosique dans de l'acide aqueux chlorohydrique de centration comprise entre 37 et 42% en poids à une température de 30 à 50°C et on maintient la solution à cette température pendant 15 à 60 min., de manière que s'effective une dépolymérisation par hydrolyse homogène, puis

b) on arrête l'hydrolyse en sépare de la solution tout ou partie du produit dépolymérisé. Pour ce faire, on peut opérer par dilution de celle-ci et précipitation de la fraction insoluble dans l'acide dilué ou par évaporation rapide de la solution d'hydrolyse.

Grâce à la dissolution de la cellulose dans l'acide concentré, conformément à la présente invention, les parties cristallines ainsi que les parties amorphes sont dissoutes en même temps et peuvent ainsi subir une hydrolyse homogène dans l'acide concentré. Cette hydrolyse acide, homogène de l'ensemble de la cellulose s'effectue donc en phase liquide, au sein du milieu acide concentré contenant la cellulose dissoute, et permet ainsi de poursuivre la dépolymérisation de la cellulose dans des conditions bien contrôlées, c'est-à-dire d'une façon sélective, et d'arrêter cette hydrolyse acide homogène lorsque la cellulose dépolymérisée dissoute atteint un degré de polymérisation réduit, qui peut avoir toute faible valeur désirée, selon le produit dépolymérisé à fabriquer dans chaque cas. Une telle hydrolyse acide homogène dépend essentiellement de la concentration de l'acide, de la température et de la durée de réaction, facteurs qui constituent tous des paramètres que l'on peut aisément régler d'une manière précise, afin d'assurer la dépolymérisation sélective de la cellulose. L'évolution de la réaction d'hydrolyse acide homogène, peut, par ailleurs, être contrôlée aisément d'une manière précise par des mesures viscométriques permettant de déterminer le degré de polymérisation moyen de la cellulose dissoute au cours de sa dépolymérisation.

Il devient ainsi possible, grâce à une telle dépolymérisation sélective effectuée par une hydrolyse acide homogène bien contrôlée de la cellulose, de fabriquer une gamme assez grande de produits dépolymérisés ayant un degré de polymérisation réduit, prédéterminé, compris entre 10 et 200.

Lorsque la dépolymérisation désirée a été effectuée, on récolte une poudre de cellulose sensiblement amorphe à partir du mélange réactionnel liquide comprenant la cellulose dépolymérisée dissoute dans le milieu acide concentré.

## Meilleurs manières de réaliser l'invention

On peut arrêter avantageusement ladite hydrolyse homogène contrôlée en refroidissant le milieu acide concentré, contenant la cellulose dépolymérisée dissoute, à une température comprise entre 0 et 10°C par exemple. Ce refroidissement n'est, cependant, pas indispensable et on peut arrêter l'hydrolyse en diluant l'acide ou par tout autre moyen permettant de séparer le produit dissous du dissolvant. Si on dilue l'acide, la cellulose dépolymérisée précipite, totalement ou partiellement, suivant le degré de dilution du milieu. Le précipité est alors séparé, par exemple par essorage ou centrifugation, et séché.

Il est à remarquer à ce sujet que la solution résultant d'une période donnée d'hydrolyse consiste en un mélange de diverses fractions de cellulose dépolymérisée dont la solubilité, dans l'acide dilué, dépend de leur taux de dépolymérisation. En d'autres termes, si le milieu d'hydrolyse concentré est progressivement dilué, à l'eau par exemple, les fractions de poids moléculaire supérieur précipitent d'abord puis, lors des dilutions progressives ultérieures, les autres fractions de poids moléculaire décroissant précipitent tour à tour, les fractions de poids moléculaire inférieur étant récoltées les dernières.

4

Par ailleurs, moins les fractions de cellulose dépolymérisée sont solubles, plus leur taux de cristallinité est élevé. En conséquence, plus la cellulose est dépolymérisée plus elle est amorphe, ce qui constitue un élément surprenant de la présente invention et imprévisible en fonction de l'état général de la technique (voir notamment l'article de Ø. ELLEFSEN cité plus haut), suivant lequel l'état amorphe est surtout lié aux celluloses ayant subi un broyage mécanique, ces celluloses amorphes recouvrant leur état cristallin par dissolution dans un acide puis reprécipitation.

Il convient cependant de noter l'existence d'une référence récente, le brevet américain USP 3,397,198 (GREIDINGER et al.), qui décrit une cellulose partiellement dépolymérisée consistant en particules extrêmement fines (dimensions colloïdales) de structure totalement amorphe. Suivant cette référence, on obtient ce produit en dissolvant la cellulose dans un excès considérable (10:1) d'acide sulfurique 70—75% à 35—45°C et en laissant l'hydrolyse s'effectuer un instant très court (2—3 min.), mais contrôlé avec précision, puis en arrêtant la réaction par dilution avec un grand volume d'eau et séparant ensuite le solide précipité par filtration. Le DP de ce produit n'est pas donné, mais est indiqué comme étant inférieur à celui des celluloses dégradées microcristallines connues. Ce produit et ce procédé se distinguent nettement de ceux de l'invention, notamment par les points suivants: Le produit de la référence est complétement amorphe alors que le degré d'amorphicité du produit de l'invention n'est pas supérieur à 83% (17% de cristallinité). Les particules du produit de l'invention ont, de préférence, une taille 50 à 100 $\mu$m (visibles à l'oeil nu) tandis que celles du produit de la référence ont des dimensions colloïdales. Le DP du produit de la référence semble inférieur à celui du produit de l'invention et, cependant, la référence indique qu'il est insoluble dans l'eau alors que, dans l'invention, la cellulose dépolymérisée peut avoir une solubilité dans l'eau atteignant environ 20%. L'acide utilisé dans le procédé de la référence est très concentré et les temps réactionnels très courts, ce qui rend la réaction difficile à contrôler. Dans l'invention, l'utilisation d'acides chlorhydrique plus dilué perment de mieux contrôler le temps de réaction et, par ailleurs, le HCl peut être éliminé par évaporation (spray drying), ce qui ne semble guère faisable dans le cas de la référence. Finalement, dans le cadre de l'invention, le HCl volatilisé peut être récupéré et recyclé facilement, ce qui rend le procédé particulièrement économique et non polluant.

Pour précipiter, par dilution, la cellulose dépolymérisée de l'invention, on peut utiliser tout moyen de précipitation approprié, par exemple une adjonction d'un non-solvant, qui sera avantageusement l'eau, mais qui peut être également le méthanol, l'alcool éthylique, l'acétone. Il est cependant entendu que l'on peut utiliser tout autre agent précipitant ou moyen approprié en vue d'une séparation solide/liquide de la cellulose dépolymérisée.

Des essais de précipitation effectuées également dans le cadre de la présente invention, ont indiqué que l'on peut réaliser une bonne récupération de la cellulose dépolymérisée précipitée par une dilution jusqu'à 10—30% de l'acide chlorhydrique, après qu'il ait servi à effectuer ladite hydrolyse homogène contrôlée.

On peut en outre effectuer, en cas de besoin, une précipitation fractionnée de la cellulose dépolymérisée par des dilutions successives dudit milieu acide, et séparer respectivement de ce milieu des fractions de cellulose dépolymérisée ayant des degrés de polymérisation différents, compris entre 10 et 200. La cellulose dépolymérisée ainsi précipitée dans le milieu acide peut être ensuite séparée par décantation, essorage, filtration, ou centrifugation, ou le cas échéant par toute autre méthode appropriée de séparation solide/liquide. La matière précipitée ainsi séparée sera enfin séchée, en la soumettant de préférence à une opération de séchage par pulvérisation ("spray drying"). On peut également sécher par "spray drying" la solution d'hydrolyse, le HCl ainsi éliminé étant récupérable et recyclable. Une telle précipitation, suivie d'une séparation et d'un séchage telles que décrites ci-dessus, permet d'obtenir un produit pulvérulent d'une teneur finale en eau voisine de 5% et d'une granulométrie d'environ 50 à 100 $\mu$m.

Au lieu dudit séchage par pulvérisation "spray drying" qui conduit à une évaporation instantanée ("flash evaporation"), il est cependant également possible d'effectuer un séchage par évaporation lente sous basse pression et à une température qui ne dépasse pas 40°C pour éviter une cristallisation éventuelle. Dans ce cas, on peut si nécessaire réduire la granulométrie du produit séché, par un broyage à sec.

La cellulose dépolymérisée dissoute peut être également récupérée directement en stabilisant par refroidissement le mélange réactionnel liquide résultant de ladite hydrolyse acide contrôlée et en le soumettant ensuite à un séchage par pulvérisation ("spray drying") provoquant une évaporation instantanée ("flash evaporation") du milieu acide concentré.

La cellulose dépolymérisée sensiblement amorphe est ainsi récupérée sous forme d'une poudre très finement divisée. Son degré de polymérisation moyen sera alors généralement compris entre 30 et 100, et sa solubilité dans l'eau peut atteindre 20%.

Les caractéristiques physico-chimiques des celluloses dépolymérisées obtenues conformément à la présente invention peutent être déterminées de la manière suivante:

La viscosité intrinsèque du produit dépolymérisé peut être déterminée après avoir effectué une dissolution dans le cupriéthylène diamine: procédé CUEM, norme DIN 54270 (1977) et son degré de polymérisation moyen de manière bien connue, à partir de la valeur de la viscosité intrinsèque ainsi mesurée. La teneur en anhydroglucose de la cellulose dépolymérisée peut être déterminée par réaction

5

**0 020 469**

enzymatique avec la glucose oxydase après hydrolyse totale de ladite cellulose dépolymérisée en glucose. Cette teneur est en relation directe avec le contenu effectif en cellulose de la matière de départ (pureté du produit cellulosique). Le degré d'amorphicité peut être déterminé par spectrographie aux rayons X, comme on le verra plus loin. L'état de surface de la poudre obtenue peut être visualisé par observation au microscope à balayage. Le rendement de conversion global est déterminé par gravimétrie et exprimé en pourcent du poids sec de la cellulose traitée.

La matière première utilisée pour la mise en oeuvre de l'invention sera généralement riche en $\beta$-cellulose (95%). Elle peut être une cellulose native sous forme d'une pâte de bois purifiée (blanchie) ou de fibres de coton ("coton linters"), ou bien une cellulose régénérée sous forme de fibres de viscose. On peut en outre envisager une matière première cellulosique à plus faible pureté, telle que par exemple une pâte de bois non blanchie ou pâte de récupération.

La dépolymérisation de la cellulose, par une hydrolyse acide contrôlée telle que prévue conformément à l'invention est effectuée dans l'acide chlorhydrique concentré à 37—42%, qui est un solvant très efficace de la cellulose. Il assure le mouillage et la dissolution rapide de la cellulose, en même temps qu'une hydrolyse des liaisons glucosidiques appartenant aussi bien au réseau cristallin qu'aux parties amorphes des fibres cellulosiques: c'est-à-dire il permet d'effectuer une hydrolyse acide homogène de la cellulose.

Le rendement de conversion et la qualité (degré de polymérisation et d'amorphicité) des celluloses dépolymérisées produites conformément à l'invention peuvent dépendre dans une certaine mesure de la cellulose utilisée comme matière première, ainsi que des conditions de traitement choisies dans chaque cas, comme on le verra-plus loin. Des essais d'hydrolyse acide effectués dans le cadre de la présente invention ont indiqué que d'excellents résultats peuvent être obtenus en effectuant une dépolymérisation par une hydrolyse en milieu acide chlorhydrique concentré, dans les gammes de conditions suivantes:

—Concentration de l'acide HCl : 37 à 42%

—Température de l'hydrolyse : 30 à 50°C

—Durée d'hydrolyse : 15 à 60 minutes

—Rapport massique solution
d'HCl/cellulose : 4 à 10

Il est toutefois entendu que l'on peut également envisager d'utiliser d'autres milieux acides concentrés pour effectuer ladite hydrolyse contrôlée, par exemple l'acide sulfurique concentré à 37—72%, ou des mélanges des acides cités. On peut également envisager d'utiliser un certain nombre de solvants organiques, tels que diméthylsulfoxide (DMSO) ou diméthylformamide (DMF), en vue de faciliter la dissolution de la cellulose dans l'acide concentré.

Le degré de polymérisation moyen de la cellulose dépolymérisée produite conformément à la présente invention peut être ajusté d'une manière assez précise par l'intermédiaire d'au moins l'un des paramètres suivants du procédé selon l'invention:
—La durée ($t_H$) de l'hydrolyse, c'est-à-dire la durée de contact de la cellulose avec le milieu acide.
—La température du milieu acide.
—La concentration du milieu acide.

Possibilités d'applications industrielles
Les exemples suivants illustrent la mise en oeuvre de la présente invention pour la compréhension desquels on se référera également au dessin annexé dans lequel:
—Les figures 1a et 1b sont dess graphiques illustrant la variation du DP et son inverse en fonction du temps d'hydrolyse selon les résultats expérimentaux correspondant à l'exemple 2.
—La figure 2 représente des spectres de diffraction aux rayons X de deux poudres obtenues suivant l'exemple 2 ainsi que d'une substance cellulosique de départ.
—La figure 3 montre une image agrandie (x 500) obtenue au microscope électronique à balayage (type stéréoscan) d'une poudre de cellulose dépolymérisée amorphe telle qu'on l'a obtenue dans l'exemple 2.
—La figure 4 illustre la variation du degré de polymérisation moyen ($DP_m$) de la cellulose dépolymérisée précipitée par adjonction d'eau à la solution d'hydrolyse en fonction de la concentration finale de cet acide après dilution.
—La figure 5 montre, à titre comparatif, une image agrandie d'un poudre de cellulose microcristalline de l'art antérieur.

Exemple 1
On a utilisé une pâte de bois blanchie, broyée du type Rauma C (degré de polymérisation moyen $DP_{mo} = 1140$; taux de cristallinité 95%; teneur en eau 5%) comme matière première cellulosique. On a

6

dissous 100 g de cette pâte de bois dans un litre d'acide chlorhydrique concentré à 40% et on a maintenu le tout, en agitation à 30°, pendant 15 minutes. On a alors ajouté au mélange réactionnel liquide une quantité de glace suffisante pour diluer l'acide HCl et réduire sa concentration de 40% à 20%, provoquant ainsi la précipitation de la cellulose dépolymérisée. On a ensuite séparé le produit dépolymérisé précipité par centrifugation, puis on l'a lavé à l'eau afin d'en éliminer toute trace de HCl et, enfin, on l'a séché à l'air à 40°C, de manière à ce que sa teneur en eau soit réduite à 5% environ.

On a obtenu ainsi 67 g de poudre de cellulose dépolymérisée (à 5% d'eau). Finalement, on a broyé cette cellulose dépolymérisée dans un broyeur de manière à lui conférer une granulométrie moyenne de 50 μm.

On a soumis le produit ainsi obtenu à diverses analyses et on a déterminé, notamment:

Son degré de polymérisation moyen $DP_m$, par l'intermédiaire d'une mesure de viscosité intrinsèque, selon la norme DIN No 54270. Trouvé $DP_m = 68$.

Son taux d'amorphicité A, par la méthode de L. Segal and Coll décrite dans la revue Textile Res. Journal, Octobre 1959, pages 786—794. Trouvé A = 60%.

Essai comparatif

On a soumis un second échantillon de 100 g de pâte de bois à un traitement d'hydrolyse comme décrit ci-dessus en utilisant de l'acide HCl concentré à 37% (au lieu de 40%). Après 15 min. à 30°C la cellulose de la pâte de bois n'était pas dissoute complètement. Après avoir récupéré le produit de la manière décrite sous B (i) et (ii) ci-dessus, on a obtenu 90 g de poudre de cellulose dépolymérisée, pour laquelle on a obtenu, par analyse, les valeurs suivantes: $DP_m = 190$; A = 10—20%.

On voit, par cela, que l'utilisation d'acide de concentration inférieure à 40% ne conduit pas au résultat recherché.

Exemple 2

On a soumis quatre échantillons 1 à 4 de 100 g de pâte de bois Rauma C à une hydrolyse dans du HCl 40%, à 30°C, comme décrit dans l'Exemple 1 sous A. La durée de l'hydrolyse était différente pour chaque échantillon, à savoir 15, 30, 45 et 60 minutes, respectivement.

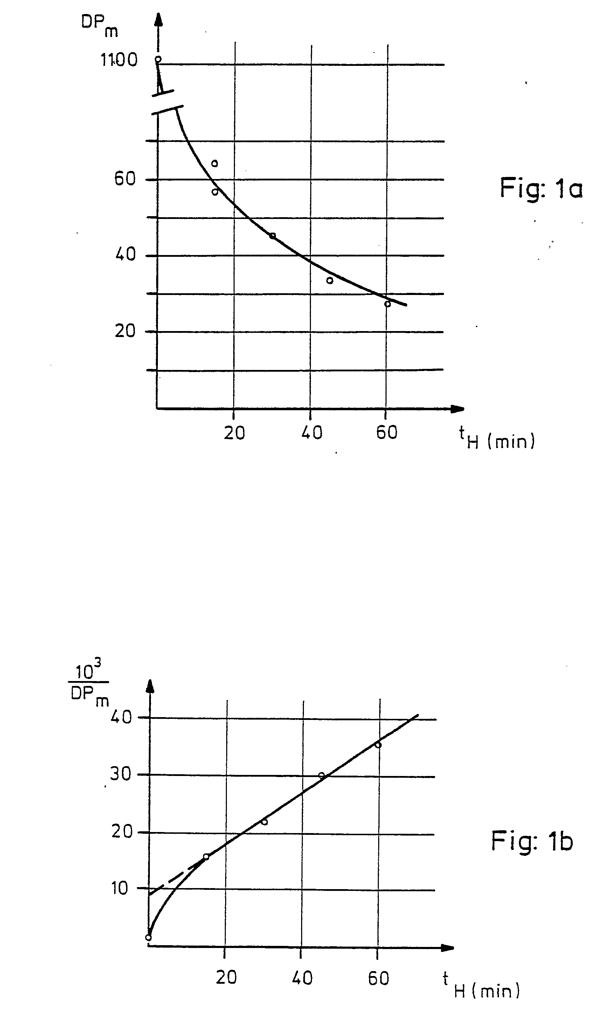

On a ensuite fait précipiter le produit dépolymérisé en diluant le mélange réactionnel jusqu'à un taux de 15% de HCl. Le produit précipité a été enfin séparé, lavé, séché à l'air à 40°C, broyé et analysé comme décrit à L'Exemple précédent. Les résultats obtenus sont rassemblés dans le tableau ci-dessous et illustrés par les figures 1a, 1b, 2 et 3.

TABLEAU I

Influence du temps d'hydrolyse sur le DP et le taux de cristallinité

| Echantillon | Temps d'hydrolyse (min.) | % Rendement | DP | Taux d'amorphicité (A) | Taux de cristallinité |
|---|---|---|---|---|---|
| 1 | 15 | 75 | 57 | 55 | 45 |
| 2 | 30 | 55 | 45 | 55 | 45 |
| 3 | 45 | 45 | 34 | 70 | 30 |
| 4 | 60 | 25 | 27 | 83 | 17 |

La figure *1a* illustre la variation, en fonction de la durée d'hydrolyse $t_H$, du degré de polymérisation moyen $DP_m$ du produit dépolymérisé obtenu. La figure 1b montre que la variation de l'inverse du degré de polymérisation moyen en fonction du temps devient pratiquement linéaire après une période initiale d'environ 15 min. où l'hydrolyse est très rapide.

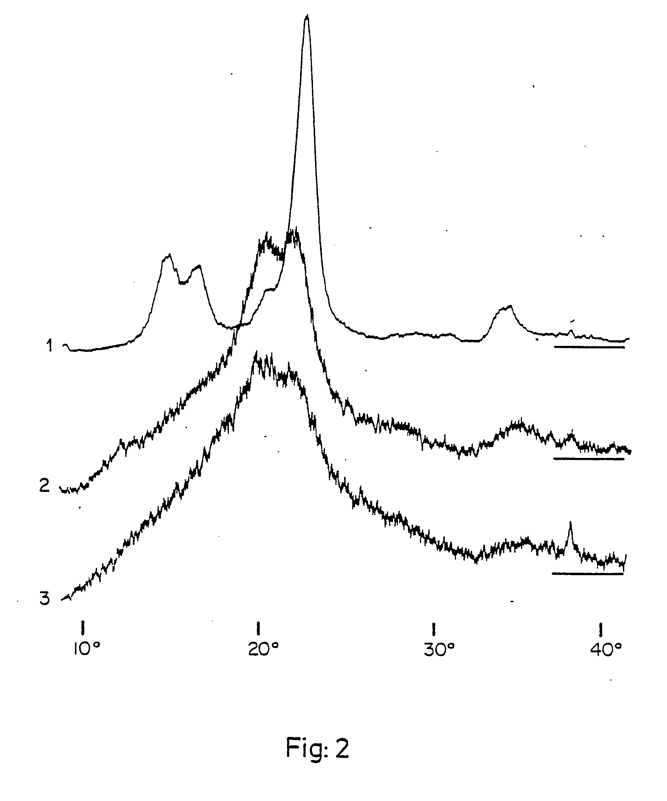

La figure 2 (spectres de diffraction aux rayons X) illustre l'amorphicité des poudres obtenues, respectivement pour les temps $t_H = 15$ minutes (courbe 2) et $t_H = 30$ minutes (courbe 3); par comparaison, le spectre d'une cellulose native Rauma C (courbe 1) indique un taux élevé de cristallinité.

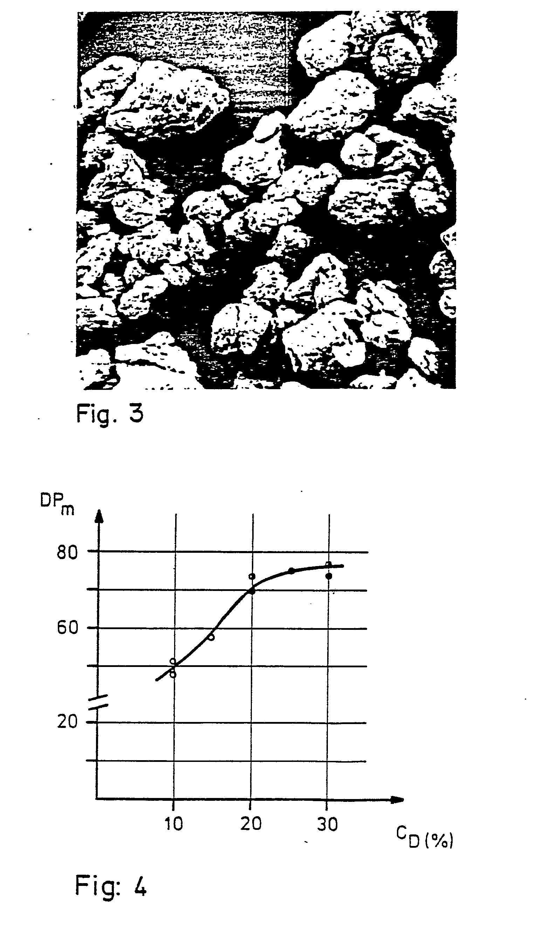

La figure 3 est une image agrandie (× 500) obtenue au microscope électronique de la poudre de cellulose dépolymérisée suivant l'invention dont les particules sont de forme sensiblement globulaires sans angles aigus.

A titre comparatif, la fig. 5 représente une cellulose microcristalline dont les particules ont une forme aciculaire (grossissement × 500). On a effectué, pour l'échantillon d'hydrolyse 15 minutes, une mesure de la répartition des degrés de polymérisation autour de la valeur moyenne $DP_m = 57$. La méthode de fractionnement utilisée a été celle décrite par R. L. MITCHELL dans la revue "Industrial and Engineering Chemistry, Vol. 45 (11), 2526 (1953); elle a donné la répartition suivante:

| DP | Quantité en % de l'échantillon |
|---|---|
| 15 à 30 | 11 |
| 30 à 50 | 13 |
| 50 à 60 | 56 |
| 60 à 80 | 13 |
| 80 à 90 | 7 |

Ces résultats montrent qu'au moins la moitié (en poids) de la cellulose dépolymérisée obtenue a effectivement un degré de polymérisation correspondant à la valeur moyenne $DP_m$.

La courbe $1/DP_m$ représentée sur la figure 1b peut être interprétée de la manière suivante:

(i) Entre $t_H = 0$ et 15 minutes (la durée nécessaire à la dissolution complète de la pâte de bois), on a la superposition de deux cinétiques;

—hydrolyse très rapide de la partie amorphe de la cellulose, d'où il résulte une chute brutale de $DP_m$;

—hydrolyse plus lente de la partie cristalline de la cellulose.

(ii) Au-delà de $t_H = 15$ minutes, on a une phase d'hydrolyse acide homogène, qui reflète plus facilement la dépolymérisation de la partie cristalline dissoute, dans laquelle la valeur de $1/DP_m$ croît proportionnellement au temps $t_H$, et obéit par ailleurs à une loi linéaire du type suivant:

$$\frac{10^3}{DP_m} = b + at_H$$

dans laquelle:

b représente une valeur degré de polymérisation moyen obtenue par une extrapolation linéaire au temps $t_H = 0$.

$DP_m$ est le degré de polymérisation moyen au temps $t_H$.

a est une constante qui correspond à l'activité des protons et dépend de la température ainsi que la concentration initiale de l'acide. Cette concentration $C^H$ peut être comprise entre 37 et 42%, la température T entre 30 et 40°C, et la durée totale $t^H$ de l'hydrolyse entre 15 et 60 minutes.

La relation ci-dessus caractérise une degradation homogène de la macromolécule de la cellulose dissoute, et cela quel que soit l'état de cristallisation initial de la matière première.

Il est en outre entendu que l'on peut prolonger l'hydrolyse acide homogène afin de réaliser une dépolymérisation permettant d'atteindre des valeurs de $DP_m$ encore plus basses, allant jusqu'à 10 par exemple.

Exemple 3

On a traité 5 échantillons (5 à 9) de 40 g de la matière première que celle décrite à l'Exemple 1 avec 400 ml d'acide HCl à 40%, à 30°C pendant 15 minutes, ceci comme décrit dans l'Exemple 1.

On a ensuite fait précipiter, comme déjà décrit, le produit dépolymérisé en ajoutant, pour cette préparation, des quantités différentes d'eau à chaque échantillon, de manière que la concentration $C_D$ de l'acide HCl ainsi dilué soit différente pour chacun de ceux-ci; cette concentration finale $C_D$ étant, respectivement, de 10, 15, 20, 25 et 30%, pour les échantillons 5 à 9. On a observé alors que la quantité de matière précipitée était différente dans chaque cas, le poids de poudre récupérée étant en raison inverse de la concentration $C_D$. Le produit précipité a été enfin séparé, lavé, séché, broyé et analysé comme décrit aux Exemples précédents.

La figure 4 montre la variation du degré de polymérisation moyen $DP_m$ du produit dépolymérisé obtenu, en fonction de la concentration de précipitation $C_D$ de l'acide HCl dilué. On voit que le taux d'amorphicité est fonction du $DP_m$. Il ressort de cet Exemple que lorsqu'on dilue progressivement la solution d'hydrolyse par des quantités progressives d'eau, les fractions cellulosiques ayant le $DP_m$ le plus élevé sont les premières à précipiter; les fractions de $DP_m$ inférieur ne précipitant qu'après dilution plus poussée de la solution. On voit également que le degré d'amorphicité va de pair avec le degré de dépolymérisation.

TABLEAU II

Influence de la dilution du milieu réactionnel sur le rendement en cellulose dépolymérisée et sur le $DP_m$ et le taux de cristallinité de celui-ci

| Echantillon | % HCl après dilution $C_D$ | % Rendement | DP | Taux d'amorphicité (A) | Taux de cristallinité |
|---|---|---|---|---|---|
| 5 | 10 | 80 | 50 | 65 | 35 |
| 6 | 15 | 75 | 55 | 60 | 40 |
| 7 | 20 | 65 | 70 | 50 | 50 |
| 8 | 25 | 50 | 75 | 50 | 50 |
| 9 | 30 | 40 | 80 | 30 | 70 |

Exemple 4

On a broyé à sec 1,5 kg de bourres de coton ("linters") ayant une teneur en eau de 4,4%, un degré de polymérisation moyen $DP_m^o$ égal à 2580 et un taux de cristallinité de 92%, de manière à obtenir la matière première cellulosique que l'on a utilisée de la manière suivante:

On a pulvérisé 12 litres d'HCl concentré 40% à 30°C sur ladite matière première (1,5 kg de fibres de coton) contenue dans un récipient de 30 litres soumis à un mouvement rotatif. Les fibres ont subi ainsi un gonflement uniforme et se sont dissoutes facilement. On a maintenu le tout 60 min à 30°C, puis on a refroidi à 15°C le mélange réactionnel de manière à stopper le processus d'hydrolyse. On a filtré la solution froide et on a soumis ledit mélange liquide à un séchage par pulvérisation ("spray drying") dans un atomiseur alimenté en air chauffé afin d'effectuer une évaporation instantanée ("flash evaporation") de l'acide contenu dans le mélange liquide. On a récolté ainsi 1,4 kg de poudre cellulose dépolymérisée d'une granulométrie d'environ 100 $\mu$m, que l'on a analysé comme décrit à l'exemple 1, ce qui a fourni les résultats suivants:

—Degré de polymérisation moyen $DP_m = 7$

—Taux d'amorphicité A = 20—30%

Exemple 5

On a dépolymérisé pendant 40 min. 1,5 kg de fibres de coton dans 12 litres d'HCl concentré 40% à 30°C, suivant la méthode décrite aux Exemples précédents. On a filtré la solution sur verre fritté, puis on a dilué le mélange à l'eau jusqu'à un taux en HCl de 20%, ce qui a provoqué la précipitation d'une première fraction (No. 10) de poudre de cellulose dépolymérisée. On a ainsi centrifugé et séché 0,95 kg de poudre de cellulose dépolymérisée d'une granulométrie d'environ 10$\mu$m, que l'on a analysée comme décrit aux Exemples précédents, ce qui a fourni les résultats suivants:

—Degré de polymérisation moyen $DP_m = 122$

—Taux d'amorphicité estimé A = 15%

On a ensuite dilué à $C_D = 7,5$ % l'acide HCl à 20% provenant de la centrifugation précédente, ce qui a occasionné la précipitation d'une deuxième fraction de cellulose dépolymérisé (No 11), qu'on a également séparée par centrifugation, lavée et séchée de façon similaire. On a récupéré ainsi cette deuxième fraction (0,30 kg) de poudre de cellulose dépolymérisée présentant une granulométrie d'environ 100 $\mu$m et les constantes suivantes:

—Degré de polymérisation moyen $DP_m = 35$

—Taux d'amorphicité estimé A = 60%

Exemple 6

(Précipitation fractionnée de la cellulose dépolymérisée)

On a hydrolysé 15 min à 30°C un échantillon de 100 g de la matière première Rauma C avec 1 litre d'HCl 40%. Puis on a précipité la cellulose dépolymérisée en 4 étapes successives de la manière suivante:

(i) On a d'abord dilué l'acide 40% jusqu'à une concentration $C_D = 25$% afin de faire précipiter une première fraction de cellulose dépolymérisée qu'on a séparée par centrifugation, lavée, séchée et broyée finement comme décrit dans l'exemple 1. On a récolté ainsi 50 g d'une poudre de cellulose dépolymérisée de granulométrie moyenne 50 $\mu$m (Echantillon No 12) qu'on a analysé comme décrit à l'exemple 1. Trouvé $DP_m = 75$.

(ii) On a ensuite dilué $C_D = 20$% la solution à 25% d'HCl provenant de la séparation de ladite première fraction et on a fait ainsi précipiter une deuxième fraction de cellulose dépolymérisée (Echantillon No. 13), qu'on a également séparée par centrifugation, lavée séchée et broyée de façon similaire. On a récolté ainsi 16,5 g dont le $DP_m$ a été mesuré. Trouvé $DP_m = 55$.

O 020 469

(iii) On a ensuite dilué à $C_D = 15\%$ la solution à 20% d'HCl provenant de la deuxième centrifugation et on a fait précipiter une troisième fraction de cellulose dépolymérisée qu'on a séparée, toujours par centrifugation, lavée séchée et broyée. On a récolté ainsi 8,0 g d'une troisième fraction (Echantillon No 14) qu'on a analysée de façon similaire. Trouvé $DP_m = 25$.

(iv) On a ensuite dilué à $C_D = 10\%$ la solution à 15% d'HCl provenant de la troisième centrifugation et on a fait précipiter une dernière fraction de cellulose dépolymérisée qu'on a séparée, lavée, séchée broyée et analysée, comme décrit plus haut. Trouvé $DP_m = 12$, rendement 3 g (Echantillon No 15).

Les divers résultats sont rassemblés au tableau ci-dessous:

TABLEAU III
Précipitation fractionnéede la cellulose dépolymérisée

| Echantillon | Dilution de la solution d'hydrolyse Taux de HCL(%) | (%) Produit récolté | DP | Taux d'amorphicité | Taux de cristallinité |
|---|---|---|---|---|---|
| 12 | 40 à 25 | 50 | 75 | 50 | 50 |
| 13 | 25 à 20 | 17 | 55 | 60 | 40 |
| 14 | 20 à15 | 8 | 25 | 80 | 20 |
| 15 | 15 à 10 | 3 | 12 | 80 | 20 |
| | | Total 78 | | | |

Des résultats du tableau ci-dessus ainsi que de ceux des exemples qui précèdent, on peut déduire ce qui suit:

—La dissolution complète des parties cristallines et amorphes de la cellulose est nécessaire pour assurer une amorphicité élevée du produit dépolymérisé obtenu.

—La dissolution de la pâte de bois est plus rapide que la dissolution des linters de coton. (En outre, l'utilisation de la pâte de bois, bon marché, comme matière première peut actuellement présenter un intérêt économique par rapport aux linters de coton).

—Le séchage final devrait être effectué dans des conditions adaptées autant que possible à éviter une recristallisation éventuelle du produit dépolymérisé. (Séparation rapide et température peu élevée).

—Le degré de polymérisation moyen $DP_m$ du produit dépolymérisé peut être réduit en:

(i) augmentant le titre $C_H$ de l'acide d'hydrolyse (exemple 1).

(ii) augmentant la durée $t_H$ de l'hydrolyse (exemple 2) et/ou

(iii) diluant fortement, lors de la séparation, la solution d'hydrolyse (exemple 3), ce qui permet d'assurer, en même temps, un bon rendement de récupération du produit dépolymérisé.

—Les plus hautes valeurs de $DP_m$ (c'est-à-dire un faible degré de dépolymérisation) correspondent en revanche à:

—un titre relativement peu élevé de l'acide d'hydrolyse.

—un temps d'hydrolyse relativement court

—une dilution peu poussée en fin d'hydrolyse.

Par conséquent, les conditions favorables pour obtenir un bon rendement de produits utiles, et ceci selon l'application envisagée de cas en cas, sont par exemple, d'hydrolyser à 30°C la pâte de bois dans du HCl concentré à 40% pendant 15 à 20 minutes et de diluer ensuite l'acide jusqu'à un taux de 15—20% pour provoquer la précipitation pratiquement complète du produit dépolymérisé.

La présente invention fournit ainsi une poudre de cellulose dépolymérisée qui présente une structure sensiblement amorphe, une forme microglobulaire poreuse, et un degré de polymérisation bien contrôlé, de sorte que cette poudre présente une combinaison de propriétés particulièrement intéressantes pour une grande gamme d'applications industrielles. A cet égard, on peut citer notamment les propriétés suivantes de ladite poudre:

—Compatibilité accrue, par rapport à une cellulose native ou régénérée, avec d'autres produits de base tels que: amylacés, protéines et lipides.

—Dispersibilité améliorée dans l'eau, favorisant la formation de gels.

—Utilité particulière des deux propriétés ci-dessus dans le domaine alimentaire, notamment en ce qui concerne la préparation de formulations nouvelles pouvant contenir jusqu'à 25% en poids de cellulose dépolymérisée; la fabrication de denrées à humidité moyenne ("intermediate moisture foods"); les problèmes de la texturisation; et l'amélioration des qualités organoleptiques en présence de protéines et de sucres.

—Réactivité chimique améliorée, due à la surface active microglobulaire poreuse importante, favorisant la synthèse de dérivés (types ethers) hautement hydrosolubles et de basse viscosité bien

10

définie, pouvant être utilisés dans différents secteurs de la chimie cosmétique ou pharmaceutique.

Exemples d'utilisation

## Exemple 7

Barres de chocolat diététique

On a préparé une pâte à goût de noisette en mélangeant les ingrédients suivants:

| Ingrédients | Parties en poids |
| --- | --- |
| Pâte de noisette ordinaire | 15 |
| Purée de noisettes rôties | 5 |
| Farine de soja | 4 |
| Lécithine | 3 |
| Sorbitol | 10 |
| Sirop de glucose (à 45° Bé) | 30 |
| Sirop de fructose (à 70% de solides) | 18 |
| Sacharose | 10 |
| Gélatine | 1 |
| Eau | 4 |

A 750 g du mélange ci-dessus on a ajouté 250 g de la poudre de cellulose dépolymérisée correspondant à l'échantillon de l'exemple 1 et on a passé le tout à l'extrudeuse de manière à former la pâte en bâtonnets d'environ 10 cm de long et 15 à 20 mm d'épaisseur. Puis on a trempé les bâtonnets dans du chocolat fondu afin de les recouvrir d'une pellicule de chocolat.

Par ailleurs, on a préparé des échantillons témoins de composition identique mais dans lesquels la cellulose était une cellulose commerciale classique pour emplois alimentaires.

Les barres de chocolat ainsi préparées ont été goûtées par plusieurs personnes que se sont accordées pour déclarer que le chocolat contenant la poudre de cellulose amorphe de l'invention donnait à l'aliment plus de fondant et une impression gustative moins sèche que la poudre de cellulose commerciale.

## Exemple 8
### Préparation de comprimés

On a mélangé à sec dans un malaxeur 800 g d'acide ascorbique, 95 g de lactose, 5 g de stéarate de magnésium et 100 g d'une cellulose dépolymérisée suivant l'invention ayant un degré d'amorphicité d'environ 35%, un $DP_m$ de 70, une teneur en eau de 4% et une granulométrie moyenne de 50 à 100 m (refus de 38% sur un tamis de 50 $\mu$m), volume spécifique apparent au tassement de 1,6 cm³/g. On a moulé et comprimé ce mélange dans une presse commerciale sous 55 MN/m² de manière à préparer des comprimés d'environ 0,4 g chacun. Ces comprimés avaient une densité de 1,3 g/cm³ et une dureté de 6,1 kg.

La cellulose dépolymérisée de l'invention ccconvient donc parfaitement à la confection de comprimés à usage pharmaceutique sans avoir les inconvénients que présente pour cet usage la cellulose-micro-cristalline, notamment en ce qui concerne le passage de celle-ci à travers la musqueuse gastro-intestinale. (voir à ce sujet J. SIEDERMANN Zur Frage der Unbedenklichkeit bei der Verwendung von mikrokristalliner Cellulose für kalorienreduzierte Lebensmittel: Die Nahrung 20 5, 495 (1976).

## Exemple 9
### Préparation d'un produit de pâtisserie

On a sélectionné une poudre de cellulose dépolymérisée suivant l'invention présentant les caractéristiques suivantes:

Dimension: Environ 50 $\mu$m; amorphicité: environ 35%; $DP_m$: environ 120; pureté en cellulose: 98%; teneur en eau: 4—5%.

On a préparé trois échantillons de pâtes A, B et C pour articles de pâtisserie au moyen des ingrédients suivants (% en poids)

| Ingrédients | A | B | C |
|---|---|---|---|
| Farine de blé | 15,4 | 11,55 | 7,7 |
| Amidon de mais étuvé | 18,0 | 13,5 | 9 |
| Levure K (Kondar) $NaAl_3H_{14}(PO_4) \cdot 4H_2O$ | 0,5 | 0,5 | 0,5 |
| Sucre semoule | 38,9 | 38,9 | 38,9 |
| Hydrolysat de protéines de soja | 6,7 | 6,7 | 6,7 |
| Blanc d'oeuf | 5,2 | 5,2 | 5,2 |
| Jaune d'oeuf | 10,3 | 10,3 | 10,3 |
| Glycerol | 5,0 | 5,0 | 5,0 |
| Cellulose dépolymérisée | — | 8,35 | 16,7 |

On a formé des bâtons d'environ 300 g au moyen des pâtes A, B et C et on a cuit ceux-ci 30 minutes au four à 190°C. Après cuisson, on a amené respectivement la teneur en eau $H_w$ (%) des gâteaux ainsi obtenus ainsi que "l'activité de l'eau" Aw (une mesure traduisant la pression partielle de la vapeur d'eau dans l'aliment). On a obtenu les résultats suivants:

A: 28,9%; 0,82.      B: 29,0%; 0,81.      C: 25,3%; 0,77

Cet abaissement de la teneur et de l'activité en eau pour les échantillons contenant la cellulose dépolymérisée suivant l'invention se traduit par une conservation améliorée de l'aliment au stockage. On a mis cette propriété en évidence de la façon suivante: on a pollué artificiellement des échantillons de gâteaux A, B et C ci-dessus par aspersion au moyen de doses de 0,5 ml d'un liquide contenant $10^5$ cellule/ml d'un mélange de bactéries, levures et moisissures; puis on a emballé ces gâteaux sous une feuille plastique et on les a stockés 2 semaines à température ambiante. Après cette période, on a constaté que les gâteaux A étaient fortement moisis, les gâteaux B légèrement et les gâteaux C étaient intacts.

En ce qui concerne les propriétés organoleptiques des gâteaux fraîchement cuits, on n'a pas constaté des différences sensibles entre les gâteaux A, B et C.

## Revendications

1. Procédé pour fabriquer une matière cellulosique dépolymérisée dont le degré de cristallinité est compris entre 17 et 70% et dont le degré de polymérisation moyen $DP_m$ correspond à 10 à 200 unités d'anhydroglucose, caractérisé par le fait qu'on dissout une matière cellulosique dans un acide chlorhydrique aqueux d'une concentration comprise entre 37 et 42% en poids à une température comprise entre 30 et 50°C, on maintient la solution à cette température pendant 15 à 60 minutes, réalisant ainsi une dépolymérisation par hydrolyse acide homogène en phase liquide, puis on arrête l'hydrolyse et on sépare de la solution d'hydrolyse tout ou partie du produit ainsi dépolymérisé.

2. Procédé suivant la revendication 1, caractérisé par le fait qu'on effectue cet arrêt de l'hydrolyse et cette séparation par dilution du milieu d'hydrolyse, une telle dilution occasionnant la précipitation de la matière polymérisée dissoute.

3. Procédé suivant la revendication 2, caractérisé par le fait qu'on effectue cette séparation par dilution progressive et précipitation fractionnée, les fractions obtenues tour à tour présentant un taux progressif de dépolymérisation et un taux dégressif de cristallinité.

4. Procédé suivant la revendicaton 1, caractérisé par le fait qu'on effectue cet arrêt de l'hydrolyse par refroidissement et cette séparation par évaporation rapide de la solution.

5. Procédé suivant la revendication 4, caractérisé par le fait qu'on évapore la solution par pulvérisation de celle-ci (spray drying) dans un courant d'air chauffé entre 160° et 80°C.

6. Procédé suivant la revendication 2, caractérisé par le fait qu'on recueille le produit précipité par essorage, filtration ou centrifugation et qu'on le sèche et la broie finement pour homogénéiser la dimension de ses particules.

7. Procédé suivant la revendication 6, caractérisé par le fait qu'on utilise, pour le broyage, un broyeur à marteaux ou à billes.

8. Matière cellulosique dépolymérisée dont le degré de cristallinité est compris entre 17 et 70% et dont le degré de polymérisation moyen DP$_m$ correspond à 10 à 200 unités d'anhydroglucose, susceptible d'être obtenue selon l'une quelconque des revendications précédentes.

9. Matière suivant la revendication 8 se présentant sous forme d'une poudre à faible taux d'humidité dont les particules sont microporeuses et ont une forme globulaire aux angles arrondis.

10. Matière suivant la revendication 8, caractérisée par le fait que la dimension des particules de ladite poudre sont de l'ordre de 50 à 100 $\mu$m et qu'au moins la moitié de ses molécules ont un DP égal au DP$_m$.

11. Matière suivant la revendication 8, caractérisée par le fait que la densité de ladite poudre à l'état libre est de 0.3 à 0.7 kg/l.

12. Matière suivant la revendication 8, caractérisée par le fait qu'elle est hydrophile et compatible avec les amidons, les protéines et les lipides.

13. Utilisation de la matière en poudre de cellulose dépolymérisée suivant les revendications 8 à 12 comme additif de produits alimentaires diététiques, ou comme excipient pharmaceutique et cosmétique.

## Claims

1. A process for manufacturing depolymerized cellulose having a degree of crystallinity between 17 and 70% and an average degree of polymerization DPm corresponding to 10 to 200 units of anhydroglucose, characterized in dissolving a cellulosic material in aqueous hydrochloric acid of concentration by weight between 37 and 42% at a temperature between 30 and 50°C, maintaining the solution at this temperature for 15 to 60 min thus providing a homogeneous acid hydrolytic depolymerization in the liquid phase, then interrupting the hydrolysis and separating part or all of the depolymerized product.

2. Process according to claim 1, characterized in effecting this hydrolysis interruption and separation by diluting the hydrolysis medium, such dilution causing the dissolved polymerized material to precipitate.

3. Process according to claim 2, characterized by the fact that this separation is carried out by progressive dilution and fractionated precipitation, the fractions obtained, in turn, having an increasing level of depolymerization and a decreasing level of crystallinity.

4. Process according to claim 1, characterized by the fact that interrupting the hydrolysis is effected by cooling and the separation is effected by a fast evaporation of the solution.

5. Process according to claim 4 characterized by the fact that the solution is evaporated by spray drying in a heated air stream between 160° and 80°.

6. Process according to claim 2, characterized by the fact that the precipitated product is collected by draining, filtration or centrifugation and that it is dried and ground finely so as to homogenize the dimensions of its particles.

7. Process according to claim 6, characterized by the fact that there is used for grinding a hammer mill or a ball mill.

8. Depolymerized cellulose material having a degree of crystallinity between 17% and 70%, an average degree of polymerization DPm corresponding to 10 to 200 units of anhydroglucose susceptible of being obtained according to any of the previous claims.

9. Material according to claim 8 in powdered form with a low moisture content, the particles of the powdered material being microporous and having a globular shape with rounded angles.

10. Material according to claim 1, characterized by the fact that the size of the particles of said powder are of the order of 50 to 100 $\mu$m and that at least half of its molecules have a DP equal to the DPm.

11. Material according to claim 1, characterized by the fact that the density of the powder in the free state is from 0.3 to 0.7 kg/l.

12. Material according to claim 1, characterized by the fact that it is hydrophilic and compatible with starches, proteins and lipids.

13. Use of the material in the form of depolymerized cellulose powder according to claims 8 to 12, as additive in dietary food products and as pharmaceutical and cosmetic excipient.

## Patentansprüche

1. Verfahren zur Herstellung eines entpolymerisierten zellulosen Stoffes, dessen Kristallinitätsgrad zwischen 17 und 70% liegt und dessen mittlerer Polymerisationsgrad DP$_m$ 10 bis 200 Anhydroglucose-Einheiten entspricht, dadurch gekennzeichnet, daß man einen zellulosen Stoff in einer wässrigen Salzsäure mit einer Konzentration zwischen 37 und 42 Gew% bei einer Temperatur zwischen 30° und 50°C auflöst, daß man die Lösung 15 bis 60 Minuten lang bei dieser Temperatur hält, wodurch eine Entpolymerisierung durch homogene saure Hydrolyse in Flüssigphase durchgeführt wird, daß man dann die Hydrolyse anhält und daß man aus der Hydrolyse-Lösung die Gesamtheit oder einen Teil des derart entpolymerisierten Produkts abtrennt.

2. Verfahren nach Anspruch 1, dadurch gekennzeichnet, daß man das Anhalten der Hydrolyse und die Abtrennung durch Verdünnung des Hydrolysemilieus durchführt, wobei eine solche Verdünnung die Ausfällung des aufgelösten polymerisierten Stoffes verursacht.

3. Verfahren nach Anspruch 2, dadurch gekennzeichnet, daß man die Abtrennung durch fortschreitende Verdünnung und fraktionierte Ausfällung durchführt, wobei die erhaltenen Anteile wechselweise einen fortschreitenden Entpolymerisierungsgehalt und einen abnehmenden Kristallinitätsgehalt aufweisen.

4. Verfahren nach Anspruch 1, dadurch gekennzeichnet, daß man das Anhalten der Hydrolyse durch Abkühlung und die Abtrennung durch schnelle Verdampfung der Lösung durchführt.

5. Verfahren nach Anspruch 4, durch gekennzeichnet, daß man die Lösung durch ihre Pulverisierung ("spray drying") in einem zwischen 160° und 80°C erhitzten Luftstrom verdampft.

6. Verfahren nach Anspruch 2, dadurch gekennzeichnet, daß man das ausgefällt Produkt durch Trocknung, Filtrierung oder Zentrifugierung gewinnt und daß man es trocknet und es fein vermahlt, um die Größenordnung seiner Teilchen zu homogenisieren.

7. Verfahren nach Anspruch 6, dadurch gekennzeichnet, daß man für die Zerkleinerung eine Hammermühle oder eine Kugelmühle verwendet.

8. Entpolymerisierter zelluloser Stoff, dessen Kristallinitätsgrad zwischen 17 und 70% liegt und dessen mittlerer Polymerisationsgrad $DP_m$ 10 bis 200 Anhydroglucole-Einheiten entspricht, der entsprechend einem der vorangehenden Patentansprüche erhalten werden kann.

9. Stoff nach Anspruch 8 in Form eines Pulvers mit geringem Feuchtigkeitsgrad, dessen Teilchen mikroporös sind und eine kugelförmige Gestalt mit abgerundeten Ecken haben.

10. Stoff nach Anspruch 8, dadurch gekennzeichnet, daß die Dimension der Teilchen dieses Pulvers in der Größenordnung zwischen 50 und 100 $\mu$m liegt und daß mindestens die Hälfte seiner Moleküle einen Polymerisationsgrad gleich dem $DP_m$ hat.

11. Stoff nach Anspruch 8, dadurch gekennzeichnet, daß die Dichte des Pulvers in freiem Zustand zwischen 0,3 und 0,7 kg/l liegt.

12. Stoff nach Anspruch 8, dadurch gekennzeichnet, daß er hydrophil und vergleichbar mit den Stärken, den Proteinen und den Lipiden ist.

13. Verwendung des Stoffes aus Pulver von entpolymerisierter Zellulose gemäß Anspruch 8 bis 12 als Additiv vu dietetischen Nahrungsmitteln oder als pharmazeutisches und kosmetisches Bindemittel.

Fig: 1a

Fig: 1b

Fig: 2

Fig. 3

Fig: 4

Fig. 5